# EUROPÄISCHE PATENTSCHRIFT

(11) **EP 3 227 077 B1**
(45) Veröffentlichungstag und Bekanntmachung des Hinweises auf die Patenterteilung: **27.02.2019**
(21) Anmeldenummer: 15828325.9
(22) Anmeldetag: 30.11.2015
(51) Int. Cl.: B29C 41/24, B29C 41/28, B29C 55/08, B01D 5/00, B01D 53/00, B01D 53/74

(54) **VERFAHREN ZUR HERSTELLUNG EINES LÖSUNGSMITTELBASIERTEN FILMS ODER EINER LÖSUNGSMITTELBASIERTEN FOLIE**
METHOD FOR PRODUCING A SOLVENT-BASED FILM OR A SOLVENT-BASED FOIL
PROCÉDÉ DE FABRICATION D'UN FILM À BASE DE SOLVANT OU D'UNE FEUILLE À BASE DE SOLVANT

(30) Priorität: 01.12.2014 AT 508692014
(43) Veröffentlichungstag der Anmeldung: 11.10.2017
(73) Patentinhaber: Berndorf Band GmbH, 2560 Berndorf (AT)
(72) Erfinder: MORGENBESSER, Karl, 2870 Aspang (AT)
(74) Vertreter: Burger, Hannes
(86) Internationale Anmeldenummer: PCT/AT2015/050304
(87) Internationale Veröffentlichungsnummer: WO 2016/086251

(56) Entgegenhaltungen:
- WO-A1-2007/111338
- JP-A- 2012 161 709
- US-A1- 2008 078 293

## Beschreibung

Die Erfindung betrifft ein Verfahren zur Herstellung eines lösungsmittelbasierten Films oder einer lösungsmittelbasierten Folie gemäß Anspruch 1.

Weiters betrifft die Erfindung eine Vorrichtung zur Herstellung eines lösungsmittelbasierten Films oder einer lösungsmittelbasierten gemäß Anspruch 5.

Ein weiteres Verfahren und eine Vorrichtung der eingangs genannten Art sind aus der US2008/078293 A bekannt geworden.

Verfahren bzw. Vorrichtungen der eingangs genannten Art kommen bei der Herstellung von Folien oder Filmen, beispielsweise Polyimid-Folien (PIC-Folien), wie sie beispielsweise in der Arzneimittelindustrie eingesetzt werden, oder Triacetatfilmen (TAC-Filme), welche beispielsweise für die Produktion von LCD-Bildschirmen verwendet werden, zum Einsatz. Hierbei läuft ein als Prozessband für das Auftragen und den Transport des Films dienendes Endlosband zwischen einer Antriebsrolle und einer Umlenkrolle um, zwischen welchen das Band eingespannt ist. Bei den bekannten Lösungen wird auf das Endlosband ein Ausgangsmaterial in flüssiger Form aufgegossen. Das Material kann sodann auf der Bandoberfläche einen homogenen Film bilden, der dann weiteren Prozessschritten, wie Trocknen, Strecken, Beschneiden etc. unterworfen werden kann. Im Folgenden wird aus Gründen der einfacheren Lesbarkeit der Begriff "Film" stellvertretend auch für Folien und ganz allgemein für jegliche Art von flächigen, insbesondere platten- oder bandförmigen, ein- oder mehrschichtigen Gebilden fester Stoffe, die dehnbar oder undehnbar elastisch oder unelastisch ausgebildet sein können, verwendet.

Um eine hohe Produktionsgeschwindigkeit zu erzielen, werden die Filme in einem noch feuchten Zustand von dem Endlosband abgezogen und weiteren Trocknungs- und Bearbeitungsschritten unterworfen. Der Begriff "feucht" bezieht sich bei lösungsmittelbasierten Filmen auf den noch im Film enthaltenen Lösungsmittelanteil. So wäre beispielsweise bei einem vollständig getrockneten Film der Lösungsmittelanteil Null. Als Lösungsmittel kann beispielsweise im Fall von TAC -Filmen Dichlormethan (Methylenchlorid) und/oder Methanol verwendet werden.

Ein Verfahren und eine Vorrichtung der eingangs genannten Art sind beispielsweise aus der WO 2007/111338 A1 bekannt geworden. Bei dem bekannten Verfahren wird zur Herstellung eines Polymerfilms, beispielsweise eines Triacetat-Films (TAC-Films), ein Polymer und ein organisches Lösungsmittel miteinander vermischt und auf ein Endlosband gegossen und nach teilweiser Aushärtung und Trocknung von dem Endlosband abgezogen und in einer Streckvorrichtung, einem sogenannten "Tenter", gereckt. Der Bereich, in welchem das Endlosband angeordnet ist, wird in diesem Dokument als "Gießbereich" bezeichnet. Hierauf wird das Material bzw. der nasse Film in einem weiteren Trockner einem sogenannten "Rollentrockner", in welchem das Material mäanderförmig über Rollen geführt wird, weiter getrocknet. Nach Verlassen des Rollentrockners wird der fertiggestellte Film in einer Wickelstation für den Transport zu einer Rolle aufgewickelt. Während des Trocknungsprozesses verdampft das Lösungsmittel sowohl im Gießbereich als auch in der nachgeschalteten Streckvorrichtung und dem Rollentrockner. Der in dem Material enthaltene Lösungsmittelgehalt nimmt im Zuge der Trocknung des Materials immer weiter ab. Zur Trocknung des Materials bzw. des Films wird im Gießbereich als auch in den einzelnen Trocknern Frischluft verwendet, die dem Prozess von außen zugeführt und nach dem Trocknen wieder an die Umgebung abgegeben wird. Um die Umweltbelastung zu minimieren, wird die mit Lösungsmittel kontaminierte Luft aus dem Gießbereich abgesaugt und in einem Kondensator abgekühlt, das verflüssigte Lösungsmittel wird sodann abgeschieden und recycelt. Nach dem Trocknen der Luft und Verflüssigen des Lösungsmittels wird die getrocknete Luft dann über eine Aktivkohleanlage an die Umgebung abgegeben. Auch bei der Filterung mittels Aktivkohle verbleibt jedoch ein Restanteil von Lösungsmittel in der gefilterten Luft. So ist beispielsweise gemäß der technischen Anleitung zur Reinhaltung der Luft (TA-Luft) bei einschlägigen Anlagen eine Reduktion des Lösungsmittelgehaltes auf 20 mg/m³ Luft gefordert.

Die bekannte Lösung hat den Nachteil, dass zwar Lösungsmittel rückgewonnen werden kann, dass jedoch eine energetisch aufwendige Aufbereitung der getrockneten, an die Umgebung abgegebenen Luft erforderlich ist, um noch vorhandene Lösungsmittelrückstände aus dieser soweit wie möglich zu entfernen.

Es ist daher eine Aufgabe der Erfindung, die oben genannten Nachteile des Stands der Technik zu überwinden.

Diese Aufgabe wird mit einem Verfahren der eingangs genannten Art erfindungsgemäß dadurch gelöst, dass zumindest ein Teil des in Schritt f) getrockneten Gasgemisches dem zumindest einen (Rollen)Trockner zugeführt wird, dadurch gekennzeichnet, dass ein Teil des in Schritt f) getrockneten Gasgemisches einem Gießbereich (2) zugeführt wird, in welchem das Material in Schritt a) auf das Band aufgebracht wird. Somit wird sichergestellt, dass das getrocknete Gasgemisch vollständig wieder in den Prozess zurückgeführt wird, selbst dann, wenn die Menge des getrockneten Gasgemisches die für den (Rollen)trockner benötigte Menge überschreiten sollte. Auf diese Weise lässt sich eine Anlage realisieren, welche keine oder nur sehr geringe Emissionen verursacht.

Durch die Zuführung des getrockneten Gasgemisches in den Bereich des Trockners lässt sich ein geschlossener Kreislauf des zur Trocknung des Materials bzw. Films verwendeten Gasgemisches realisieren. Bei der erfindungsgemäßen Lösung wird das getrocknete Gasgemisch wieder dem Prozess zugeführt und gleichzeitig wird das Lösungsmittel rückgewonnen. Die erfindungsgemäße Lösung ermöglicht es, auf eine energieaufwändige und kostenintensive Aufbereitung von Abluft zu verzichten und die zur Trocknung des Filmes verwendet Luft bzw. das verwendete Gasgemisch im Kreis zu führen, wodurch die Erzeugung von Emissionen vollständig verhindert werden kann.

Um einen besonders hohen Trocknungsgrad des Gasgemisches zu erzielen und eine sehr hohe Abscheidung von Lösungsmittel zu erzielen, kann das Gasgemisch in Schritt f) mittels eines Kryokondensationsverfahrens getrocknet werden. Hierbei wird das Gasgemisch unter den Taupunkt des Lösungsmittels, welches in dem Gasgemisch enthalten ist, abgekühlt.

Wenn dem in Schritt f) getrockneten Gasgemisch Stickstoff zugemischt wird, welcher bevorzugterweise zuvor schon für die Kryokondensation verwendet worden ist, lässt sich auf einfache Weise eine Inertisierung des für den Prozess verwendeten Gasgemisches erzielen. So kann bei einer Rückführung des getrockneten Gases in den Gießbereich durch eine Zumischung von Stickstoff die untere Explosionsgrenze für das Lösungsmittel enthaltende Gasgemisch angehoben werden. Aus diesem Grund kann ein größerer Lösungsmittelanteil in dem Material zur Herstellung des Filmes verwendet werden, was die Möglichkeit eröffnet, den Herstellungsprozess energetisch günstiger zu gestalten.

Gemäß einer vorteilhaften Weiterbildung der Erfindung, kann es vorgesehen sein, dass der zumindest eine Trockner mehrere in Transportrichtung des Materials betrachtet hintereinander liegende, baulich voneinander getrennte Zonen aufweist, wobei zumindest ein Teil des in Schritt f) getrockneten Gasgemisches zumindest in die in Transportrichtung des Materials betrachtet letzte Zone des zumindest einen Trockners eingespeist wird, da zumindest in der letzten Zone des Trockners prozessbedingt ein sehr trockenes Gasgemisch erforderlich ist.

Die oben genannte Aufgabe lässt sich auch mit einer Vorrichtung der eingangs genannten Art erfindungsgemäß dadurch lösen, dass die zumindest eine Ausströmöffnung der Kühlvorrichtung über zumindest eine Leitung mit dem Innenraum des zumindest einen Trockners verbunden ist.

In einer vorteilhaften Variante der Erfindung kann es vorgesehen sein, dass die zumindest eine Kühlvorrichtung zur Lösungsmittelrückgewinnung eine Kryokondensationsvorrichtung ist.

Gemäß einer günstigen Weiterbildung der Erfindung kann die zumindest eine Ausströmöffnung der Kühlvorrichtung mit dem Gießbereich verbunden sein.

Darüber hinaus kann der zumindest eine Trockner mehrere in Transportrichtung des Materials hintereinander liegende voneinander baulich getrennte Zonen aufweisen, wobei die Leitung, mit welcher die zumindest eine Ausströmöffnung der zumindest einen Kühlvorrichtung mit dem zumindest einen Trockner verbunden ist, in die in Transportrichtung des Materials betrachtet letzte Zone des zumindest einen Trockners mündet.

Zum besseren Verständnis der Erfindung wird diese anhand der nachfolgenden Figuren näher erläutert.

Es zeigt in stark vereinfachter, schematischer Darstellung:

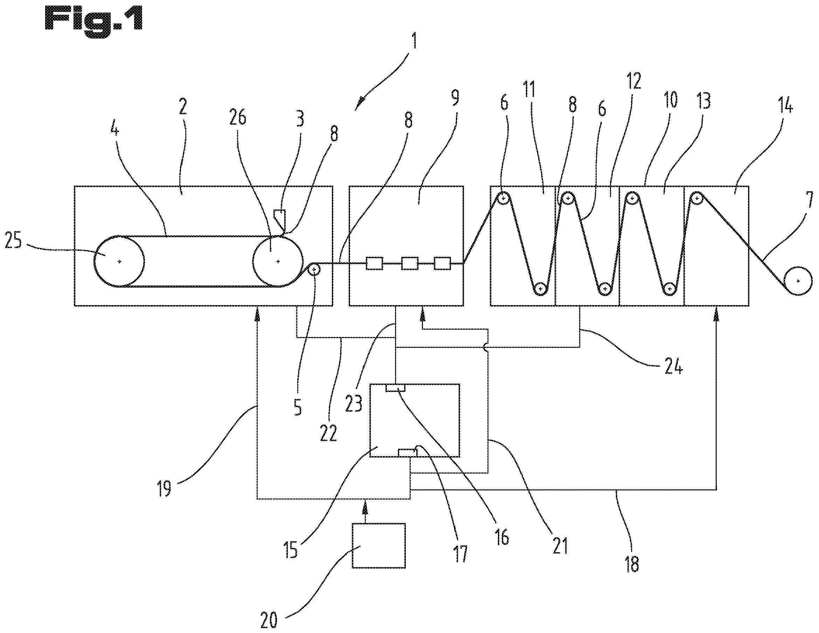

- Fig. 1: eine erfindungsgemäße Vorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Gemäß Fig. 1 weist eine erfindungsgemäße Vorrichtung 1 zur Herstellung eines Films 7 oder einer Folie einen Gießbereich 2 auf. Der Gießbereich 2, der im Stand der Technik auch als Gießkammer ("casting chamber") bezeichnet wird, ist beispielsweise mit einer Verkleidung aus Blech, eingehaust. Weiters sind in dem Gießbereich 2 ein Endlosband 4 und zumindest eine Gießvorrichtung 3 zum Aufbringen eines Materials 8 auf das Endlosband 4 angeordnet. Darüber hinaus ist in dem Gießbereich 2 eine Abziehvorrichtung 5 zum Ablösen des Materials 8 von dem Endlosband 4 angeordnet.

In einer Transportrichtung des Materials 8 gesehen ist nach dem Gießbereich 2, eine Streckvorrichtung 9 ("tenter") angeordnet, welche ebenfalls eingehaust ist. Die Streckvorrichtung 9 kann Klemmelemente, wie beispielsweise einen Spannrahmen oder Kluppen, zum Einspannen des von dem Endlosband 4 abgelösten Materials 8 aufweisen.

Nach der Streckvorrichtung 9 ist ein ebenfalls eingehauster Trockner 10, ein sogenannter "Rollentrockner", mit Rollen 6 für eine mäanderförmige Führung des Materials 8 angeordnet.

Die Vorrichtung 1 weist ferner mindestens eine Kühlvorrichtung 15 (Kältemaschine etc.) zur Lösungsmittelrückgewinnung aus einem Gasgemisch auf. Bei der Kühlvorrichtung 15 kann es sich beispielsweise um eine Vorrichtung zur Kryokondensation einen sogenannten Kryokondensator handeln, bei dem eine oder mehrere Wärmetauscherflächen mit einem kryogenen Medium, beispielsweise kaltem, gasförmigem Stickstoff thermisch verbunden sind. Der als Kühlmedium verwendete gasförmige Stickstoff kann beispielsweise eine Temperatur von - 170° C aufweisen. Durch das Kühlmedium kann das zu trocknende Gasgemisch beispielsweise auf -140°C abgekühlt werden. Geeignete Vorrichtungen zur Kryokondensation sind dem Fachmann bekannt und beispielsweise in der DE 10 2004 026 908 A1 beschrieben. Bei der Kryokondensation wird das Lösungsmittel aus dem Gasgemisch durch Abkühlung auf tiefe Temperaturen und Kondensation zurückgewonnen. Das Gasgemisch kann hierbei in indirektem Wärmeaustausch mit einem Kälteträger abgekühlt werden. Die Abkühlung des Gasgemisches kann auch in einem oder in mehreren Vorkühlern und einem Tiefkühler erfolgen. In dem oder den Vorkühlern wird kaltes Gas, wie z. B. kalter gasförmiger Stickstoff oder das gereinigte tiefkalte Prozessgas, als Kälteträger verwendet. Im Tiefkühler kommt in der Regel flüssiger Stickstoff als Kälteträger zum Einsatz.

Die Kühlvorrichtung weist mindestens eine Einströmöffnung 16 zur Zuführung eines zu trocknenden Gasgemisches von welchem das Lösungsmittel abzuscheiden ist, und mindestens eine Ausströmöffnung 17 zur Abführung des getrockneten Gasgemisches, aus welchem zumindest ein Teil des Lösungsmittels ausgeschieden wurde, auf.

Die Einströmöffnung 16 ist in der dargestellten Ausführungsform mit einem Innenraum des Gießbereichs 2 und einem Innenraum der Streckvorrichtung 9 sowie einem Innenraum des Trockners 10 über Leitungen 22, 23 und 24 verbunden. "Innenraum" bedeutet hierbei einen Bereich der innerhalb der jeweiligen Einhausungen liegt. Grundsätzlich wäre es in einer anderen Variante der Erfindung auch möglich, dass die Einströmöffnung 16 auch nur mit dem Gießbereich 2, dem Streckbereich 9 oder dem Trockner 10 verbunden ist.

Wie aus Figur 1 ersichtlich ist, ist die Ausströmöffnung 17 der Kühlvorrichtung 15 über eine Leitung 18 mit dem Innenraum des Trockners 10 verbunden. Der Trockner 10 kann mehrere in Transportrichtung des Materials 8 hintereinander liegende voneinander baulich getrennte Zonen 11, 12, 13, 14 aufweisen, die beispielsweise mittels hier nicht dargestellter Heizelemente auch auf unterschiedlichen Temperaturen gehalten werden können. Die Zonen 11, 12, 13, 14 können beispielsweise durch Bleche voneinander getrennt sein, welche Durchführungen für den Film bzw. das Material 8 aufweisen.

Die Leitung 18, mit welcher die Ausströmöffnung 17 mit dem Trockner 10 verbunden ist, kann in die in Transportrichtung des Materials 8 betrachtet letzte Zone 14 des zumindest einen Trockners 10 münden.

Weiters kann die Ausströmöffnung 17 der Kühlvorrichtung 15 auch mit dem Gießbereich 2 über eine Leitung 19 und mit der Streckvorrichtung 9 verbunden sein.

Weiters kann die Vorrichtung 1 einen Tank 20 mit Stickstoff aufweisen. Der Tank 20 kann ebenfalls über eine Leitung, beispielsweise der Leitung 19, mit dem Innenraum des Gießbereichs 2 verbunden sein. In den Leitungen 18, 19 und 21 können auch noch hier nicht dargestellte Heizelemente, beispielsweise in Form von Wärmetauschern, vorgesehen sein, um das getrocknete Gasgemisch auf eine Solltemperatur zu erwärmen.

Gemäß dem erfindungsgemäßen Verfahren, welches mit der in Fig. 1 dargestellten Vorrichtung 1 durchgeführt werden kann, wird das Lösungsmittel enthaltende Material 8 in einem fließfähigen Zustand mittels der Gießvorrichtung 3 auf das sich bewegende und zwischen zwei Rollen 25 und 26 umlaufende Endlosband 4 aufgebracht. Eine der Rollen 25, 26 kann angetrieben sein, während die andere als Umlenkrolle dient. Nach dem Aufbringen des Materials 8 auf das Endlosband 4 wird das Material 8 auf dem Endlosband 4 durch Verdampfen eines Teils des Lösungsmittels teilweise getrocknet. Um den Trocknungsvorgang zu beschleunigen, kann in dem Gießbereich 2 eine Strömung in dem dort vorhandenen Gasgemisch, welches bevorzugterweise Luft ist, erzeugt werden, beispielsweise mittels eines Gebläses. Darüber hinaus kann das Gasgemisch auf eine gewünschte Temperatur, beispielsweise zwischen 40° und 200°, insbesondere zwischen 90 und 120°, erwärmt werden.

In weiterer Folge wird das teilweise getrocknete Material 8 von dem Endlosband 4 abgelöst. Dies geschieht mit der Abziehvorrichtung 5, welche beispielsweise als Abziehrolle ausgebildet sein bzw. eine Abziehrolle umfassen kann. Das abgezogene Material 8 bildet hierbei einen nassen Film, der beispielsweise einen Lösungsmittelgehalt von 30% aufweisen kann.

Seitenkanten des von dem Endlosband 4 abgelösten Materials 8 werden in einer oder mehreren Klemmvorrichtungen, beispielsweise Kluppen oder einen Spannrahmen der Streckvorrichtung 9 eingespannt und zumindest in einer zu der Transportrichtung des Materials 8 quer verlaufenden Richtung gedehnt bzw. gereckt. Die Recktemperatur in der Streckvorrichtung 9, die ebenfalls mehrere Zonen umfassen kann, beträgt vorzugsweise 40 bis 200°C, insbesondere 120° bis 140°, so dass auch hier ein Trocknen des Materials 8 bzw. des Films durch Verdampfen von Lösungsmittel erfolgt.

Das gereckte und weiter getrocknete Material 8 wird aus der Streckvorrichtung 9 in den (Rollen)Trockner 10 überführt. Nach der Streckvorrichtung 9 kann das Material 8 bzw. der Film einen Lösungsmittelgehalt von beispielsweise 5% aufweisen. In dem Trockner 10 wird das Material 8 mäanderförmig über die Rollen 6 geführt und durch Verdampfen von Lösungsmittel weiter getrocknet.

Über die Leitungen 22 und/oder 23 und/oder 24 kann Lösungsmittel enthaltender Dampf, beispielsweise mittels einer oder mehrerer nicht dargestellte Pumpen, abgesaugt und in die Kühlvorrichtung 15 geführt werden. Das Lösungsmittel enthaltende Gasgemisch wird zur Trocknung in der Kühlvorrichtung 15 auf eine Temperatur gebracht, die unterhalb des Taupunktes des Lösungsmittels liegt, sodass durch die Kühlung des Gasgemisches das Lösungsmittel auskondensiert. Das verflüssigte Lösungsmittel kann gesammelt sowie gegebenenfalls gereinigt und dem Material 8, welches mittels der Gießvorrichtung 3 auf das Endlosband 4 aufgebracht wird, wieder zugemischt werden. Eine besonders hohe Ausbeute an Lösungsmittel und ein sehr trockenes Gasgemisch lassen sich dadurch erzielen, dass das Lösungsmittel enthaltende Gasgemisch mittels eines Kryokondensationsverfahrens abgekühlt wird. Hierbei kann das zu trocknende Gasgemisch an einem Wärmetauscher vorbeigeführt werden, der von flüssigem Stickstoff als Kühlmedium durchströmt wird. Das getrocknete Gasgemisch kann beispielsweise einen Lösungsmittelgehalt von weniger als 1%, insbesondere von weniger als 0,5% und besonders bevorzugt weniger oder gleich 0,2%, aufweisen. Wenn der Film auf einen sehr geringen Lösungsmittelgehalt getrocknet wird, beispielsweise 0,2%, so hat es sich als vorteilhaft erwiesen, dass die getrocknete Luft bzw. das getrocknete Gasgemisch in Zone 14 des (Rollen)Trockners 10 einen Taupunkt knapp oberhalb des Schmelzpunktes des Lösungsmittels, beispielsweise Dichlormethan, aufweist. Durch Verwendung des Kryokondensationsverfahrens mit gasförmigem Stickstoff als Kühlmedium wird es ermöglicht, das kondensierte Lösungsmittel (z.B. Dichlormethan) ohne ein Zufrieren des Wärmetauschers größtenteils flüssig abzuscheiden. Dadurch lässt sich eine Prozessführung realisieren, die zum Trocknen statt Frischluft einen geschlossenen Kreislauf von sehr trockner Luft bzw. eines sehr trockenen Gasgemisches vorsieht. Dadurch muss keine Luft mehr an die Umgebung abgegeben werden und eine energetisch aufwendige Aufarbeitung der getrockneten Luft ist nicht notwendig.

Nach der Trocknung des Gasgemisches wird ein Teil oder auch die gesamte Menge des getrockneten Gasgemisches dem Trockner 10, insbesondere der letzten Zone 14 des Trockners 10, zugeführt, da hier prozessbedingt ein besonders trockenes Gasgemisch erforderlich ist. Ein anderer Teil des getrockneten Gasgemisches kann dem Gießbereich 2 und/oder der Streckvorrichtung 9 zugeführt werden. Vor dem Einspeisen bzw. Rückführen des getrockneten Gasgemisches in den Prozess kann dieses wieder auf die gewünschte Prozesstemperatur beispielsweise mittels Heizelementen bzw. Wärmetauschern gebracht werden.

Durch die Rückführung des getrockneten Gasgemisches in den Trocknungsprozess kann vermieden werden, dass Umgebungsluft zugeführt werden muss. Darüber hinaus kann die Menge an entstehender Abluft reduziert bzw. das Entstehen von Abluft gänzlich vermieden werden.

Um eine Inertisierung des Gasgemisches zu realisieren und die untere Explosionsgrenze anzuheben bzw. den Bereich zwischen unterer und oberer Explosionsgrenze zu verkleinern, kann dem getrockneten Gasgemisch über den Tank 20 Stickstoff beigemengt werden. Zur Inertisierung kann beispielsweise auch der bei der Kryokondensation anfallende gasförmige Stickstoff verwendet werden. In diesem Fall kann der Tank 20 flüssigen Stickstoff enthalten, der erwärmt und in gasförmiger Form als Kühlmittel für die Kryokondensation verwendet wird.

Nach dem Trocknen in dem Trockner 10 kann der Film 7 abgekühlt und zu einer Rolle aufgewickelt werden. Das Abkühlen kann in einer hier nicht dargestellten Kühlkammer erfolgen.

Der Ordnung halber sei abschließend darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Gießbereich
- 3: Gießvorrichtung
- 4: Endlosband
- 5: Abziehvorrichtung
- 6: Rolle
- 7: Film
- 8: Material
- 9: Streckvorrichtung
- 10: Trockner
- 11: Zone
- 12: Zone
- 13: Zone
- 14: Zone
- 15: Kühlvorrichtung
- 16: Einströmöffnung
- 17: Ausströmöffnung
- 18: Leitung
- 19: Leitung
- 20: Tank
- 21: Leitung
- 22: Leitung
- 23: Leitung
- 24: Leitung
- 25: Rolle
- 26: Rolle

## Patentansprüche

1. Verfahren zur Herstellung eines lösungsmittelbasierten Films (7) oder einer lösungsmittelbasierten Folie umfassend die Schritte
a) Aufbringen zumindest eines fließfähigen, zumindest ein Lösungsmittel oder ein Lösungsmittelgemisch enthaltendes Materials (8) zur Herstellung des lösungsmittelbasierten Films (7) oder der lösungsmittelbasierten Folie auf ein sich bewegendes Endlosband (4),
b) teilweises Trocknen des Materials (8) auf dem Endlosband durch Verdampfen eines Teils des Lösungsmittels,
c) Ablösen des teilweise getrockneten Materials (8) von dem Endlosband (4),
d) Einklemmen von Seitenkanten des von dem Endlosband (4) abgelösten Materials (8) in zumindest eine Klemmvorrichtung und Dehnen des abgelösten Materials (8) zumindest in einer zu einer Transportrichtung des Materials (8) quer verlaufenden Richtung in zumindest einem dem Endlosband (4) in der Transportrichtung nachfolgenden Streckvorrichtung (9), sowie weiteres Trocknen des Materials (8) durch Verdampfen von Lösungsmittel in der zumindest einen Streckvorrichtung (9),
e) Überführen des Materials (8) aus der zumindest einen Streckvorrichtung (9) in zumindest einen Trockner (10), wobei das Material (8) in dem zumindest einen Trockner (10) mäanderförmig über Rollen geführt wird sowie weiteres Trocknen des Materials (8) durch Verdampfen von Lösungsmittel in dem zumindest einen Trockner (10),
f) Trocknung zumindest eines Teils eines das verdampfte Lösungsmittel enthaltenden Gasgemisches, insbesondere Luft, durch Abkühlen des Gasgemisches sowie Verflüssigen und Abscheiden zumindest eines Teils des Lösungsmittels,
wobei zumindest ein Teil des in Schritt f) getrockneten Gasgemisches dem zumindest einen Trockner (10) zugeführt wird, **dadurch gekennzeichnet, dass** ein Teil des in Schritt f) getrockneten Gasgemisches einem Gießbereich (2) zugeführt wird, in welchem das Material in Schritt a) auf das Band aufgebracht wird.

2. Verfahren nach Anspruch 1, **dadurch gekennzeichnet, dass** das Gasgemisch in Schritt f) mittels eines Kryokondensationsverfahrens getrocknet wird.

3. Verfahren nach einem der Ansprüche 1 oder 3, **dadurch gekennzeichnet, dass** dem in Schritt f) getrockneten Gasgemisch Stickstoff zugemischt wird.

4. Verfahren nach einem der Ansprüche 1 bis 3, **dadurch gekennzeichnet, dass** der zumindest eine Trockner (10) mehrere in Transportrichtung des Materials betrachtet hintereinanderliegende, baulich voneinander getrennte Zonen (11, 12, 13, 14) aufweist, wobei zumindest ein Teil des in Schritt f) getrockneten Gasgemisches zumindest in die in Transportrichtung des Materials (8) betrachtet letzte Zone des zumindest einen Trockners (10) eingespeist wird.

5. Vorrichtung (1) zur Herstellung eines lösungsmittelbasierten Films (7) oder einer lösungsmittelbasierten Folie, wobei die Vorrichtung (1) zumindest einen, zumindest abschnittsweise eingehausten Gießbereich (2) aufweist, in welchem zumindest ein Endlosband (4) und zumindest eine Gießvorrichtung (3) zum Aufbringen eines Materials (8) auf das Endlosband (4) angeordnet sind, und die Vorrichtung (1) weiters zumindest eine Abziehvorrichtung (5) zum Ablösen des Materials (8) von dem Endlosband (4) aufweist, wobei in einer Transportrichtung des Materials (8) gesehen nach dem Gießbereich (2), zumindest eine, zumindest abschnittsweise eingehauste Streckvorrichtung (9) angeordnet ist, welche Klemmelemente zum Einspannen des von dem Endlosband (4) abgelösten Materials (8) aufweist, wobei nach der zumindest einen Streckvorrichtung (9) zumindest ein, zumindest abschnittsweise eingehauster Trockner (10) mit Rollen (6) für eine mäanderförmige Führung des Materials (8) angeordnet ist, wobei die Vorrichtung (1) zumindest eine Kühlvorrichtung (15) zur Lösungsmittelrückgewinnung aus einem Gasgemisch aufweist, wobei die Kühlvorrichtung (15) zur Lösungsmittelrückgewinnung zumindest eine Einströmöffnung (16) zur Zuführung eines Gasgemisches, von welchem das Lösungsmittel abzuscheiden ist, und zumindest eine Ausströmöffnung (17) zur Abführung des Gasgemisches, aus welchem zumindest ein Teil des Lösungsmittels ausgeschieden wurde, aus der Kühlvorrichtung (15) aufweist, wobei die zumindest eine Einströmöffnung (16) mit einem Innenraum des Gießbereichs (2) und/oder einem Innenraum der Streckvorrichtung (9) und/oder einem Innenraum des zumindest einen Trockners (10) verbunden ist, wobei die zumindest eine Ausströmöffnung (17) der Kühlvorrichtung (15) über zumindest eine Leitung (18) mit dem Innenraum des zumindest einen Trockners (10) verbunden ist, **dadurch gekennzeichnet, dass** die zumindest eine Ausströmöffnung (17) der Kühlvorrichtung (15) mit dem Gießbereich (2) über eine Leitung (19) verbunden ist..

6. Vorrichtung nach Anspruch 5, **dadurch gekennzeichnet, dass** die zumindest eine Kühlvorrichtung (15) zur Lösungsmittelrückgewinnung eine Kryokondensationsvorrichtung ist.

7. Vorrichtung nach einem der Ansprüche 5 oder 6, **dadurch gekennzeichnet, dass** sie einen Tank (20) mit gasförmigen Stickstoff aufweist, wobei der Tank (20) über eine Leitung mit einem Innenraum des Gießbereichs (2) verbunden ist.

8. Vorrichtung nach einem der Ansprüche 5 bis 7, **dadurch gekennzeichnet, dass** der zumindest eine Trockner (10) mehrere in Transportrichtung des Materials (8) hintereinander liegende voneinander baulich getrennte Zonen (11, 12, 13, 14) aufweist, wobei die Leitung (18), mit welcher die zumindest eine Ausströmöffnung (17) der zumindest einen Kühlvorrichtung (15) mit dem zumindest einen Trockner (10) verbunden ist, in die in Transportrichtung des Materials (8) betrachtet letzte Zone (14) des zumindest einen Trockners (10) mündet.

## Claims

1. A method for producing a solvent-based film (7) or a solvent-based foil comprising the steps of
a) applying at least one free-flowing material (8) containing at least one solvent or a solvent mixture, for producing the solvent-based film (7) or the solvent-based foil to a moving endless belt (4),
b) partially drying the material (8) on the endless belt by evaporating a part of the solvent,
c) removing the partially dried material (8) from the endless belt (4),
d) clamping side edges of the material (8) removed from the endless belt (4) into at least one clamping device and stretching the removed material (8) at least in a direction running transversely to a transport direction of the material (8) in at least one stretching device (9) following the endless belt (4) in the transport direction, as well as further drying the material (8) by evaporating solvent in the at least one stretching device (9),
e) transferring the material (8) from the at least one stretching device (9) into at least one dryer (10), wherein the material (8) is guided in a meander shape in the at least one dryer (10) via rollers as well as further drying the material (8) by evaporating solvent in the at least one dryer (10),
f) drying at least a part of a gas mixture containing the evaporated solvent, in particular air, by cooling down the gas mixture as well as liquefying and separating at least a part of the solvent,
wherein at least a part of the gas mixture dried in step f) is fed to the at least one dryer (10), **characterized in that** a part of the gas mixture dried in step f) is fed to a pouring region (2), in which the material is applied to the belt in step a).

2. The method according to claim 1, **characterized in that** the gas mixture is dried by means of a cryocondensation method in step f).

3. The method according to one of claims 1 or 3, **characterized in that** nitrogen is added to the gas mixture dried in step f).

4. The method according to one of claims 1 to 3, **characterized in that** the at least one dryer (10) has a plurality of zones (11, 12, 13, 14), which, viewed in the transport direction of the material, are located one behind the other and are structurally separated from one another, wherein at least a part of the gas mixture dried in step f) is fed into the last zone, viewed in the transport direction of the material (8), of the at least one dryer (10).

5. A device (1) for producing a solvent-based film (7) or a solvent-based foil, wherein the device (1) has at least one pouring region (2), which is at least partially enclosed, in which at least one endless belt (4) and at least one pouring device (3) for applying a material (8) to the endless belt (4) are arranged, and the device (1) further has at least one removal device (5) for removing the material (8) from the endless belt (4), wherein, viewed in a transport direction of the material (8) downstream from the pouring region (2), at least one stretching device (9), which is at least partially enclosed, is arranged, which stretching device has clamping elements for clamping the material (8) removed from the endless belt (4), wherein at least one dryer (10) comprising rollers (6) for a meander-shaped guiding of the material (8) is arranged downstream from the at least one stretching device (9), wherein the device (1) has at least one cooling device (15) for solvent recovery from a gas mixture, wherein, to recover solvent, the cooling device (15) has at least one inflow opening (16) for feeding a gas mixture, from which the solvent is to be separated, and at least one outflow opening (17) for discharging the gas mixture, from which at least a part of the solvent was separated, from the cooling device (15), wherein the at least one inflow opening (16) is connected to an interior of the pouring region (2) and/or an interior of the stretching device (9) and/or an interior of the at least one dryer (10), wherein the at least one outflow opening (17) of the cooling device (15) is connected to the interior of the at least one dryer (10) via at least one line (18), **characterized in that** the at least one outflow opening (17) of the cooling device (15) is connected to the pouring region (2) via a line (19).

6. The device according to claim 5, **characterized in that** the at least one cooling device (15) for the solvent recovery is a cryocondensation device.

7. The device according to one of claims 5 or 6, **characterized in that** it has a tank (20) comprising gaseous nitrogen, wherein the tank (20) is connected to an interior of the pouring region (2) via a line.

8. The device according to one of claims 5 to 7, **characterized in that** the at least one dryer (10) has a plurality of zones (11, 12, 13, 14), which are located one behind the other in the transport direction of the material (8) and are structurally separated from one another, wherein the line (18), by means of which the at least one outflow opening (17) of the at least one cooling device (15) is connected to the at least one dryer (10), leads into the last zone (14), viewed in the transport direction of the material (8), of the at least one dryer (10).

## Revendications

1. Procédé de fabrication d'un film à base de solvants (7) ou d'une feuille à base de solvants comprenant les étapes suivantes :
a) application d'au moins un matériau (8) fluide contenant au moins un solvant ou un mélange de solvants, pour la fabrication du film à base de solvants (7) ou de la feuille à base de solvants sur une bande sans fin (4) en mouvement,
b) séchage partiel du matériau (8) sur la bande sans fin par évaporation d'une partie du solvant,
c) détachement du matériau (8) partiellement séché de la bande sans fin (4),
d) serrage des bords latéraux du matériau (8) détaché de la bande sans fin (4) dans au moins un dispositif de serrage et dilatation du matériau (8) détaché au moins dans une direction transversale par rapport à une direction de transport du matériau (8), dans au moins un dispositif d'étirement (9) suivant la bande sans fin (4) dans la direction de transport, et séchage supplémentaire du matériau (8) par évaporation du solvant dans l'au moins un dispositif d'étirement (9),
e) transfert du matériau (8) de l'au moins un dispositif d'étirement (9) vers au moins un séchoir (10), le matériau (8) étant guidé, dans l'au moins un séchoir (10), en zigzags sur des rouleaux, et séchage supplémentaire du matériau (8) par évaporation du solvant dans l'au moins un séchoir (10),
f) séchage d'au moins une partie d'un mélange de gaz, plus particulièrement de l'air, contenant le solvant évaporé, par refroidissement du mélange de gaz et liquéfaction et séparation d'au moins une partie du solvant,
au moins une partie du mélange de gaz séché à l'étape f) étant introduite dans l'au moins un séchoir (10), **caractérisé en ce qu'**une partie du mélange de gaz séché à l'étape f) est introduite dans une partie de coulée (2) dans laquelle le matériau est appliqué, à l'étape a), sur la bande.

2. Procédé selon la revendication 1, **caractérisé en ce que** le mélange de gaz est séché à l'étape f) au moyen d'un procédé de cryo-condensation.

3. Procédé selon l'une des revendications 1 ou 3, **caractérisé en ce que**, au mélange de gaz séché à l'étape f) est ajouté de l'azote.

4. Procédé selon l'une des revendications 1 à 3, **caractérisé en ce que** l'au moins un séchoir (10) comprend plusieurs zones (11, 12, 13, 14) séparées physiquement entre elles disposées les unes derrière les autres dans la direction de transport du matériau, au moins une partie du mélange de gaz séché à l'étape f) étant introduite au moins dans la dernière zone, dans la direction de transport du matériau (8), de l'au moins un séchoir (10).

5. Dispositif (1) pour la fabrication d'un film à base de solvants (7) ou d'une feuille à base de solvants, le dispositif (1) comprenant au moins une partie de coulée (2) carénée au moins à certains endroits, dans laquelle au moins une bande sans fin (4) et au moins un dispositif de coulée (3) sont disposés pour l'application d'un matériau (8) sur la bande sans fin (4) et le dispositif (1) comprenant en outre au moins un dispositif d'extraction (5) pour le détachement du matériau (8) de la bande sans fin (4), moyennant quoi, après la partie de coulée (2), dans une direction de transport du matériau (8), est disposé au moins un dispositif d'étirement (9) caréné au moins à certains endroits, qui comprend des éléments de serrage pour le serrage du matériau (8) détaché de la bande sans fin (4), moyennant quoi, après l'au moins un dispositif d'étirement (9), est disposé au moins un séchoir (10), caréné au moins à certains endroits, avec des rouleaux (6) pour un guidage en zigzags du matériau (8), le dispositif (1) comprenant au moins un dispositif de refroidissement (15) pour la récupération du solvant à partir d'un mélange de gaz, le dispositif de refroidissement (15) pour la récupération du solvant comprenant au moins une ouverture d'entrée (16) pour l'introduction d'un mélange de gaz, dont le solvant doit être séparé, et au moins une ouverture de sortie (17) pour l'évacuation du mélange de gaz duquel au moins une partie du solvant a été séparée, hors du dispositif de refroidissement (15), l'au moins une ouverture d'entrée (16) étant reliée avec un espace interne de la partie de coulée (2) et/ou un espace interne du dispositif d'étirement (9) et/ou un espace interne de l'au moins un séchoir (10), l'au moins une ouverture de sortie (17) du dispositif de refroidissement (15) étant reliée par l'intermédiaire d'au moins une conduite (18) avec l'espace interne de l'au moins un séchoir (10), **caractérisé en ce que** l'au moins une ouverture de sortie (17) du dispositif de refroidissement (15) est reliée avec la partie de coulée (2) par l'intermédiaire d'une conduite (19).

6. Dispositif selon la revendication 5, **caractérisé en ce que** l'au moins un dispositif de refroidissement (15) pour la récupération du solvant est un dispositif de cryo-condensation.

7. Dispositif selon l'une des revendications 5 ou 6, **caractérisé en ce qu'**il comprend un réservoir (20) avec de l'azote sous forme gazeuse, le réservoir (20) étant relié avec un espace interne de la partie de coulée (2) par l'intermédiaire d'une conduite.

8. Dispositif selon l'une des revendications 5 à 7, **caractérisé en ce que** l'au moins un séchoir (10) comprend plusieurs zones (11, 12, 13, 14) séparées physiquement entre elles disposées les unes derrière les autres dans la direction de transport du matériau (8), la conduite (18) avec laquelle l'au moins une ouverture de sortie (17) de l'au moins un dispositif de refroidissement (15) est reliée avec l'au moins un séchoir (10), débouche dans la dernière zone (14), dans la direction de transport du matériau (8), de l'au moins un séchoir (10).
